# EUROPEAN PATENT APPLICATION

(11) **EP 4 838 145 A1**
(43) Date of publication of application: **11.11.2026**
(21) Application number: 25175091.5
(22) Date of filing: 08.05.2025
(51) Int. Cl.: F24F 11/32, F24F 11/38, F24F 11/39, F24F 11/52, F24F 110/40, F24F 110/50, F24F 110/80

(54) **CONTROL UNIT, AIR TREATMENT DEVICE AND METHOD**

(71) Applicant: Wood's Production Sweden AB, 441 39 Alingsås (SE)
(72) Inventor: Tedsjö, Patrik, 441 39 Alingsås (SE)
(74) Representative: Valea AB

(57) **Abstract**

This disclosure relates to a control unit (115) for determining an indicator indicative of a need for a service action to be performed on at least one air treatment component (108) comprised in an air treatment device (100). The control unit (115) is arranged to obtain at least one operational parameter associated with operation of the air treatment device (100) and at least one environmental parameter associated with an environment surrounding the air treatment device (100). The control unit (115) is arranged to, based on at least one of the at least one operational parameter and the at least one environmental parameter, evaluate operational status of the at least one air treatment component (108). The control unit (115) is arranged to, based on the evaluated operational status, determine an indicator indicative of a need for a service action to be performed on the at least one air treatment component (108).

## Description

### TECHNICAL FIELD

The present disclosure relates generally to a control unit, an air treatment device and a method. More particularly the present disclosure relates to determining an indicator indicative of a need for a service action to be performed on at least one air treatment component comprised in the air treatment device.

### BACKGROUND

Air treatment devices are commonly used in various applications, aimed at improving indoor air quality. These devices include a variety of technologies such as air purifiers, humidifiers, dehumidifiers, and air conditioning systems. Each type of device serves a specific purpose in air quality management, contributing to the overall health and comfort of occupants.

Effective service, repair, and maintenance of these air treatment devices are important to ensure their optimal performance and longevity. This includes, for example, cleaning or replacing filters, inspecting mechanical components, and ensuring that sensors and controls function correctly. One conventional method is the use of fixed timers for service intervals, which has both advantages and limitations.

While fixed timers provide a structured service schedule, they can lead to inefficiencies. Not all users operate their devices under the same conditions; factors such as usage frequency, air quality, and environmental conditions can significantly influence the actual service needs of the device. As a result, the air treatment device may either be over-serviced or under-serviced. Over-servicing may lead to unnecessary costs and waste, while under-servicing may compromise the device's performance and air quality, potentially leading to health risks. Furthermore, fixed timers may rely on user compliance. If users forget to check service reminders or are unaware of the importance of timely service, the effectiveness of this method diminishes. Additionally, many users may lack the knowledge or skills to perform service tasks correctly, leading to further complications.

Therefore, there is a need to at least mitigate or solve this issue.

### SUMMARY

An objective is to mitigate or solve at least one of the issues mentioned above and to provide improved handling of service of at least one air treatment component comprised in an air treatment device.

According to a first aspect, the objective is achieved by a control unit for determining an indicator indicative of a need for a service action to be performed on at least one air treatment component comprised in an air treatment device. The control unit is arranged to obtain at least one operational parameter associated with the operation of the air treatment device and to obtain at least one environmental parameter associated with an environment surrounding the air treatment device. The control unit is arranged to, based on at least one of the at least one operational parameter and the at least one environmental parameter, evaluate operational status of at least one air treatment component comprised in the air treatment device. The control unit is arranged to, based on the evaluated operational status, determine an indicator indicative of a need for a service action to be performed on the at least one air treatment component.

An advantage may be that handling of service of at least air treatment component comprised in an air treatment device is improved. By determining an indicator for service needs based on at least one of operational and environmental parameters, the control unit allows for proactive service. This helps prevent unexpected breakdowns, enhancing the reliability and lifespan of the air treatment device. Furthermore, since the control unit may evaluate both operational and environmental parameters, it allows for tailored service recommendations. This ensures that service actions are performed only when necessary, optimizing the use of resources and minimizing unnecessary service costs. Users of air treatment devices may be unaware of the specific service needs of their devices. The control unit simplifies this process by providing clear indicators for service actions, reducing the burden on users to monitor and assess their devices manually. By continuously monitoring operational parameters, the control unit may ensure that the air treatment components function at peak efficiency. This leads to better air quality and enhanced performance, as components are maintained and serviced based on their actual usage and environmental conditions. The ability to obtain environmental parameters may mean that the control unit may be arranged to adapt to different settings and conditions, such as varying humidity levels or pollution rates. This makes the air treatment device more effective in diverse environments, ensuring optimal performance regardless of external factors. The collection of operational and environmental data may provide valuable insights into usage patterns and air quality trends. This data may be leveraged for further improvements in device design, functionality, and user education, contributing to overall advancements in air treatment technology. By preventing premature failures and optimizing service intervals, the control unit may lead to reduced maintenance and repair costs over time. This not only saves money for users but also enhances the overall value proposition of the air treatment device. With indicators for service needs, users may become more engaged in the upkeep of their air treatment devices. This increased awareness may lead to better overall service practices and a greater understanding of air quality issues.

By ensuring timely service and efficient operation, the control unit contributes to reduced energy consumption and waste, aligning with broader goals of sustainability and environmental responsibility. The control unit offers significant advantages by enabling proactive, efficient, and user-friendly service of air treatment devices, ultimately leading to enhanced performance, user satisfaction, and cost savings.

The control unit may be arranged to output a user perceivable output representing the indicator indicative of the need for the service action to be performed on the at least one air treatment component.

An advantage may be that a user may receive instant notifications about service action needs, ensuring they are aware of any issues without having to monitor the device constantly. A user-friendly output, like a visual display or alert or a sound output, clearly communicates the specific service required. This may reduce confusion and helps users understand what action they need to take. Early notifications may lead to prompt service actions, preventing minor issues from escalating into major problems. This proactive approach helps maintain the device's efficiency and lifespan. When a user is informed of service needs in a timely manner, he/she may schedule service without significant interruptions, leading to less downtime for the air treatment device. The control unit may be arranged to deliver alerts through various means, e.g., visual, auditory, mobile app notifications, allowing users to choose their preferred method of communication. Summarized, a user-perceivable output from the control unit may greatly enhances the functionality and user experience of air treatment devices by ensuring timely service and clear communication.

The control unit may be arranged to trigger the service action to be performed on the at least one air treatment component.

An advantage of that the control unit may initiate service tasks automatically, may reduce the need for user intervention. This may ensure that service actions happen when needed without relying on users to remember or take action themselves. By automatically triggering service actions, the control unit may help maintain the reliability of air treatment components. This may lead to consistent performance and reduces the chances of air treatment component failure. The control unit may optimize the timing and type of service actions based on real-time data, ensuring that service is performed at the most effective times. This may help maximize the efficiency of the air treatment device. A user of the air treatment device may benefit from a hassle-free experience, as they don't have to manually schedule or perform service tasks. This may increase user satisfaction and encourages regular upkeep. Automatic triggering of service actions may prevent prolonged periods of poor performance or malfunction, leading to less downtime for the air treatment device. The control unit may analyze operational and environmental parameters to determine the best time to trigger service actions, leading to smarter, data-driven service strategies. By ensuring timely service actions, the control unit may help avoid costly repairs and extend the lifespan of air treatment components, leading to overall cost savings for users. In summary, the ability of the control unit to trigger service actions significantly may enhance the functionality, reliability, and user experience of air treatment devices.

The control unit may be arranged to estimate a lifetime of the at least one air treatment component based on the at least one operational parameter and the at least one environmental parameter. The indicator may be determined based on the estimated lifetime. The lifetime may be referred to as a lifespan. The lifetime may be a remaining lifetime.

An advantage of estimating the lifetime may help anticipating when an air treatment component might need service. This may allow the control unit and/or the user to act before a failure occurs, reducing downtime. By understanding the expected lifespan, the control unit and/or the user may ensure that components are replaced or serviced at the right time. This keeps the air treatment device running efficiently and effectively. Preventing unexpected breakdowns means fewer emergency repairs. The control unit and/or the user may plan service more effectively, often leading to lower overall service costs. Knowing when air treatment components are likely to need service allows for better planning of resources and inventory, reducing waste of materials and parts. The control unit may gather data over time to improve the accuracy of lifetime estimates, and this feedback loop may lead to better designs and improved handling by the control unit. By optimizing the use of air treatment components and reducing waste, the control unit may help lessen the environmental impact associated with manufacturing and disposing of parts. Performing service on air treatment components based on accurate lifetime estimates ensures that the air treatment device remains reliable, providing consistent performance for users. The ability to factor in both operational and environmental parameters allows for a more tailored approach to service, adapting to different usage conditions and user environments. In summary, estimating the lifetime of air treatment components brings significant technical advantages that enhance performance, reliability, and user satisfaction, while also reducing costs and environmental impact.

The indicator may be determined based on at least one of:
- a usage pattern of the air treatment device,
- environmental load, and
- pre-treatment influence on the at least one air treatment component, wherein the pre-treatment comprises pre-treatment of incoming air entering the air treatment device before being treated by the at least one air treatment component.

An advantage of analyzing the usage pattern may be that the control unit may provide specific service recommendations based on how the air treatment component is actually being used. This may ensure that service actions are timely and relevant to the user's habits. Understanding the environmental load may help the air treatment component to adjust its operation based on external factors, like air quality or humidity. This may lead to better performance and more efficient use of energy and resources. Assessing the influence of pre-treatment on incoming air may allow the control unit to optimize air quality before it reaches the main treatment components. This may reduce strain on those components, extending their lifespan and reducing the need for frequent service. The ability to incorporate multiple parameters may mean that the control unit may be arranged to adapt to changing conditions in real-time. This flexibility may enhance overall performance and ensures that the air treatment remains effective under varying circumstances. By combining data from usage patterns and environmental conditions, the control unit may predict when service is needed. This proactive approach may prevent potential issues before they arise. Providing clear indicators based on these parameters may help a user to understand when and why service is needed. This straightforward feedback may encourage the users to engage with the air treatment device and ensures better overall care. Gathering data on usage and environmental factors may enable continuous improvement. Manufacturers may use this data to refine designs and enhance future models, leading to better products. By optimizing service schedules and reducing unnecessary service actions, the user may save money on repairs and replacements, making the air treatment device more economical in the long run. Efficient operation and effective pre-treatment may lead to reduced energy consumption and waste, making the air treatment device more environmentally friendly. In summary, using these parameters to determine the indicator may enhance the air treatment device's performance, efficiency, and user experience while promoting sustainability and cost savings.

The at least one air treatment component may be at least one of:
- an air filter,
- an ionization unit,
- a dehumidifying coil,
- a humidifying chamber, and
- a cooling element.

An advantage may be that it is possible to determine an indication indicative of when to change or clean the at least one treatment component. This keeps the air treatment device running smoothly. By ensuring the at least one treatment component is changed at the right time, better air quality may be maintained, which is important for health. A clean air treatment component may mean the air treatment device doesn't have to work as hard. This improves energy efficiency. Changing the at least one treatment component based on the indicator may help prevent costly repairs or replacements due to overworked components. The user may obtain clear alerts about when service is needed, making it easier for taking care of the air treatment device without guesswork. Keeping track of the status of the at least one treatment component helps protect other parts of the air treatment device, leading to a longer overall lifespan for the air treatment device. Summarized, determining the indicator for an air treatment component such as an air filter, ionization unit, dehumidifying coil, humidifying chamber, cooling element etc., may help ensure clean air, it may save money, and may make service easy.

The control unit may be arranged to obtain an ionization parameter indicative of ionization effectiveness of a pre-treatment unit. The ionization parameter may be obtained from at least one sensor arranged downstream of a primary treatment unit. The control unit may be arranged to, based on the ionization parameter, determine whether an air filter comprised in the primary treatment unit negatively affects ionization performance of pre-treatment unit. The operational status may be determined based on the ionization parameter and its effect on the ionization performance unit.

An advantage may be that the control unit may continuously monitor the ionization effectiveness of the pre-treatment unit using real-time data from sensors. This ensures that any changes in performance are detected promptly. By analyzing the ionization parameter, the control unit may make informed decisions about the operation of the air filter in the primary treatment unit. This leads to improved efficiency and effectiveness in managing air quality. The control unit may identify potential issues with the air filter before they become serious problems. By determining if the filter negatively affects ionization performance, maintenance can be scheduled proactively, reducing downtime. The ability to assess the interaction between the pre-treatment unit and the primary treatment unit may allow for adjustments that can optimize overall system performance. This may enhance the effectiveness of the air treatment process. With better ionization performance, the air treatment system may more effectively remove pollutants and improve air quality. This is especially beneficial in environments where air purity is critical. By ensuring that all components work effectively together, the air treatment system may reduce its energy consumption. A well-functioning ionization process may decrease the workload on the primary treatment unit, leading to energy savings. The integration of sensors and a control unit makes the system easier to manage. Users may quickly assess performance and make adjustments as needed, which simplifies operation. In summary, the control unit provides a smart, efficient way to monitor and enhance air treatment processes, ensuring better air quality and operational efficiency.

According to a second aspect, the objective is achieved by an air treatment device comprising the control unit of the first aspect. An advantage of the second aspect may be that handling of service of at least air treatment component comprised in an air treatment device is improved. Advantages of the second aspect may correspond to the advantages of the first aspect of the disclosure. Further, all features of the first aspect are applicable to and combinable with all features of the second aspect, and vice versa.

The air treatment device may comprise or may be associated with a user interface arranged to output user perceivable output representing the indicator.

An advantage of a user interface may be that it may provide straightforward information about the device's status, like when service is needed or if air quality is poor. It may keep users informed about the air treatment device's performance, helping them take timely action to maintain optimal air quality. A well-designed interface may make it simple for users to understand how the air treatment device works and what it needs, reducing confusion. With the user interface, a user may quickly check the status of the air treatment device without needing technical knowledge, making it user-friendly. The interface may allow a user to adjust settings based on the indicators, giving them more control over their indoor air quality. By providing alerts for when air treatment components need changing or other service is required, the user interface may help the user keep it running efficiently. Summarized, the user interface that shows indicators may make the air treatment device easier to use, keeps users informed, and helps maintain good air quality.

The air treatment device may comprise at least one of:
- a pre-treatment unit arranged to pre-treat incoming air coming into the air treatment device;
- a primary treatment unit arranged to perform primary treatment of the air coming into the air treatment device; and
- at least one sensor.

The pre-treatment unit may be arranged to remove large particles or contaminants from the incoming air before it reaches the primary treatment unit, ensuring that the air is cleaner and reducing the burden on subsequent treatment processes. This leads to improved overall air quality. The primary treatment unit may be arranged to perform the main filtration or purification processes, effectively removing smaller particles, allergens, and harmful substances. The combination of both units may ensure and/or improve comprehensive air treatment. By incorporating a pre-treatment unit, the primary treatment unit may operate more efficiently, as it deals with air that has already been partially filtered. This may lead to reduced energy consumption and longer lifespan for the primary treatment components. The combination of pre-treatment and primary treatment may allow for a more thorough and effective treatment process, ensuring that the air meets desired quality standards before it is circulated back into the environment. The at least one sensor may be arranged to obtain at least one environmental parameter associated with an environment surrounding the air treatment device and/or to obtain at least one operational parameter associated with operation of the air treatment device. The sensors for environmental parameters may monitor factors such as temperature, humidity, and air quality levels in the surrounding environment. This real-time data may enable dynamic adjustments to the treatment processes based on current conditions, ensuring optimal performance and efficiency. With the data obtained from environmental sensors, the air treatment device may adapt its operation to changing conditions. For example, if humidity levels rise, the air treatment device might adjust its treatment methods to accommodate this change, leading to better performance in various environmental conditions. The integration of sensors and air treatment units may allow for smart notifications and alerts regarding air quality and service needs. This may enhance user experience by providing valuable information and reducing the need for manual monitoring. Furthermore, the combination of these components may allow for greater control over the air treatment process. Users or control systems may tailor the treatment based on specific needs or preferences, leading to a more personalized approach to air quality management. The layered approach to air treatment, i.e. pre-treatment unit followed by primary treatment unit, may ensure that the air treatment device may handle a wider range of contaminants and conditions, leading to more reliable air quality outcomes. By improving the efficiency of the air treatment process and extending the lifespan of components through effective pre-treatment, users may experience long-term savings on service and energy costs. Overall, the combination of effective air treatment and real-time monitoring may contribute to a healthier indoor environment, reducing the risk of respiratory issues and improving overall well-being for occupants. In summary, the integration of a pre-treatment unit, a primary treatment unit, and environmental sensors in an air treatment device may lead to improved air quality, operational efficiency, adaptability, and user experience, while also promoting health and cost-effectiveness.

The pre-treatment unit may comprise an electrostatic ionizer for ionizing incoming air.

The ionizer may be arranged to charge particles in the air, causing them to clump together. This makes it easier for filters to capture them later, improving air quality. By ionizing the air, the ionizer may help reduce allergens like dust, pollen, and pet dander, making the environment healthier for occupants. Furthermore, lonizers may help neutralize odors by breaking down odor-causing particles, leading to fresher-smelling air. With larger clumps of particles, filters work better and last longer, reducing the frequency of filter changes. Ionized air may flow more freely through the air treatment device, improving overall efficiency and performance of the air treatment device. The ionizer may reduce the load on the primary treatment units, leading to less frequent maintenance and repair needs. Summarized, an electrostatic ionizer may enhance air quality, improves filter performance, and reduces service needs, making the air treatment device more effective and user-friendly.

The at least one sensor may comprise at least one of: a differential pressure sensor for measuring an ambient pressure associated with the air treatment device, a particle sensor, an ionization sensor and an electric resistance sensor.

The sensor may help track how well the air treatment device is working by measuring pressure changes. This may indicate if the air treatment device is operating efficiently or if there are blockages. By measuring ambient pressure, the sensor may help optimize airflow through the air treatment device. This may ensure that the air treatment device operates effectively and maintains good air quality. Changes in pressure readings may signal potential problems, like clogged filters or mechanical failures. This may allow for timely service before issues become serious. The sensor data may be used to adjust the operation of the air treatment device automatically, improving overall performance and energy efficiency. By ensuring the air treatment device runs smoothly, the sensor may contribute to more reliable air quality and comfort for users. In summary, a differential pressure sensor improves monitoring, efficiency, and reliability of the air treatment device, leading to better performance and user satisfaction. The particle sensor may detect the concentration of airborne particles, providing real-time data on air quality. This may be important in environments where particulate matter levels need to be controlled. By understanding particle load, adjustments may be made to optimize the treatment process, ensuring that the air treatment system operates within acceptable limits for air quality. The ionization sensor measures the ionization levels within the air treatment device, helping to assess the effectiveness of the ionization process in removing pollutants. The feedback from the ionization sensor may be used to adjust operational parameters to enhance ionization efficiency, leading to better air purification outcomes. Electric resistance sensors may measure the resistance across filters, indicating their condition and efficiency. A rise in resistance may indicate that filters are clogged and need replacement. Monitoring electric resistance helps in understanding how much energy is being consumed by the air treatment device, enabling energy efficiency optimization.

The air treatment device may be at least one of: air purifier, dehumidifier, humidifier and an air cooler.

As an air purifier, the air treatment device may remove pollutants and allergens, enhancing air quality. As a humidifier or dehumidifier, it may maintain optimal humidity levels, which is crucial for comfort and health.

According to a third aspect, the objective is achieved by a computer implemented method for determining an indicator indicative of a need for a service action to be performed on at least one air treatment component comprised in an air treatment device. The method comprising obtaining, by a processing circuitry of a computer system, at least one operational parameter associated with an operation of the air treatment device.

The method comprises obtaining, by the processing circuitry, at least one environmental parameter associated with an environment surrounding the air treatment device. The method comprises, based on at least one of the at least one operational parameter and the at least one environmental parameter, evaluating, by the processing circuitry, operational status of the at least one air treatment component comprised in the air treatment device. The method comprises, based on the evaluated operational status, determining, by the processing circuitry, an indicator indicative of the need for the service action to be performed on the at least one air treatment component.

An advantage of the third aspect may be that handling of service of at least air treatment component comprised in an air treatment device is improved. Advantages of the third aspect may correspond to the advantages of at least one of the first aspect and the second aspect. Further, all features of the first aspect and the second aspect are applicable to and combinable with all features of the third aspect, and vice versa.

According to a fourth aspect, the objective is achieved by a computer program product comprising program code for performing, when executed by a processing circuitry, the method of the third aspect.

An advantage of the fourth aspect may be that handling of service of at least air treatment component comprised in an air treatment device is improved. Advantages of the fourth aspect may correspond to the advantages of at least one of the first aspect, the second aspect and the third aspect. Further, all features of the first aspect, the second aspect and the third aspect are applicable to and combinable with all features of the fourth aspect, and vice versa.

According to a fifth aspect, the objective is achieved by a non-transitory computer-readable storage medium comprising instructions, which when executed by a processing circuitry, cause the processing circuitry to perform the method of the third aspect.

An advantage of the fifth aspect may be that handling of service of at least air treatment component comprised in an air treatment device is improved. Advantages of the fifth aspect may correspond to the advantages of at least one of the first aspect, the second aspect, the third aspect and the fourth aspect. Further, all features of the first aspect, the second aspect, the third aspect and the fourth aspect are applicable to and combinable with all features of the fifth aspect, and vice versa.

Thanks to the indicator, handling of service of at least air treatment component comprised in an air treatment device is improved.

The embodiments herein are not limited to the features and advantages mentioned above. A person skilled in the art will recognize additional features and advantages upon reading the following detailed description.

### BRIEF DESCRIPTION OF THE DRAWINGS

The embodiments herein will now be further described in more detail by way of example only in the following detailed description by reference to the appended drawings illustrating the embodiments and in which:
- FIG. 1: is a schematic drawing illustrating an air treatment device.
- FIG. 2: is a flow chart illustrating a method.
- FIG. 3: is a schematic drawing illustrating a control unit.

The drawings are not necessarily to scale and the dimensions of certain features may have been exaggerated for the sake of clarity. Emphasis is instead placed upon illustrating the principle of the embodiments herein.

### DETAILED DESCRIPTION

This disclosure relates to an adaptive monitoring and control for an air treatment device. The air treatment device may comprise a pre-treatment module, sensors and a control unit that calculates real-time component wear and efficiency. The pre-treatment module may be or may comprise , e.g., ionizer, humidifier, evaporative cooler. The control unit may be arranged to generate service alerts based on environmental conditions, operational load, and predicted wear levels. The control unit may be applicable to any suitable air treatment device, for example air purifiers, dehumidifiers, humidifiers, and air coolers.

The disclosure relates to real-time monitoring of pre-treatment efficiency and environmental input and predictive maintenance logic combining sensor data and adaptive algorithms. The disclosure is applicable across multiple air treatment categories, for example smart air purifiers, advanced dehumidifiers and humidifiers, air coolers with integrated air quality sensors, just to mention some examples. There may be a user interface for actionable feedback, optionally via mobile/cloud.

By dynamically adjusting service intervals based on real-time conditions and pre-treatment effectiveness, e.g., ionization, the control unit may ensure that an air treatment component, e.g. a filter, is serviced at the right time - not too early, not too late. This improves air quality over time, reduces unnecessary maintenance costs, increases trust in the air treatment device, and ensures optimal energy efficiency. It also reduces downtime and service interventions.

The present disclosure relates to a combination of pre-filter ionization with sensor-based monitoring and adaptive algorithms to intelligently determine air treatment component status in an air treatment device. Precise real-time recommendations on when to replace at least one air treatment component is provided, increasing operational efficiency. The disclosure combines pre-treatment stage. such as ionization, sensor-based monitoring, and adaptive performance analysis to provide accurate service indications and performance diagnostics.

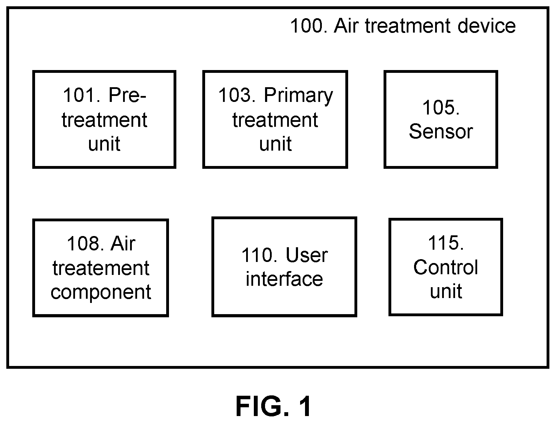

**FIG. 1** is a schematic drawing illustrating an **air treatment device 100.** In short, the air treatment device 100 is arranged to obtain input air, treat the input air and output treated air. The treatment may comprise any suitable treatment, such as for example purifying, dehumidifying, humidifying, temperature changing etc. The air treatment device 100 may be any suitable device arranged to treat air, for example air purifier, a dehumidifier, a humidifier and an air cooler. The air treatment device 100 may be at least one of: an air purifier, a dehumidifier, a humidifier and an air cooler. The air purifier may comprise, for example, ionization and filters. The dehumidifier may comprise for example mechanical and desiccant elements. The humidifier may comprise, for example, water vapor diffusion or ultrasonic misting. The air cooler may comprise, for example, evaporative cooling or hybrid systems. The air treatment device 100 may be arranged to be located in any suitable location, for example an indoor space.

The air treatment device 100 may comprise a treatment part which may comprise at least one of a **pre-treatment unit 101** and a **primary treatment unit 103.** The input air may be first treated in the pre-treatment unit 101, and the air output by the pre-treatment unit 101 may thereafter be treated by the primary treatment unit 103. The input air may be treated only by the primary treatment unit 103, i.e. the input air is inputted directly into the primary treatment unit 103 without going via any pre-treatment unit 101.

The pre-treatment unit 101 may be arranged to pre-treat incoming air coming into the air treatment device 100, e.g. to condition incoming air. The pre-treatment unit 101 may be arranged to remove large particles or contaminants from the incoming air before it reaches the primary treatment unit, ensuring that the air is cleaner and reducing the burden on subsequent treatment processes. This leads to improved overall air quality. The pre-treatment unit 101 may comprise an electrostatic ionizer for ionizing incoming air. The electrostatic ionizer may be arranged to charge airborne particles prior to filtration. Incoming air is ionized in the pre-treatment unit 101 prior to entering the mechanical filter of the primary treatment unit 103. For a humidifier, the pre-treatment unit 101 may comprise a pre-evaporation device. For a cooler, the pre-treatment unit 101 may comprise air chilling. One reason for doing the pre-treatment of the air may be that charged particles adhere more efficiently to the filter media and that it results in better filtration, longer air treatment component life, and even particle distribution. The pre-treatment unit 101 may be arranged to ensure consistent conditioning of incoming air before primary treatment stage.

The primary treatment unit 103 may be arranged to perform the main filtration or purification processes, effectively removing smaller particles, allergens, and harmful substances. The primary treatment unit 103 may be arranged to perform primary treatment of the air coming into the air treatment device 100. The primary treatment unit 103 may comprise at least one of: filter, dehumidifying coil, humidifying chamber and cooling element. The primary treatment unit 103 may be described as being located downstream the pre-treatment unit.

The air treatment device 100 comprises at least one **sensor 105.** There may be *n* number of sensors, where *n* is a positive integer. The at least one sensor 105 may be any sensor arranged for sensing parameters relevant for the treatment of the air. The sensor 105 may be arranged to obtain real-time data. The at least one sensor 105 may monitor factors such as pressure, airflow, temperature, humidity, and air quality levels in the surrounding environment, particle concentration, ionization level, air flow rate, pressure drop, and electric resistance downstream of the filter. The at least one sensor may be arranged to measure humidity, temperature, airflow, particle levels, and filter resistance. The real-time data from the at least one sensor 105 may enable dynamic adjustments to the treatment processes based on current conditions, ensuring optimal performance and efficiency. For example, the at least one sensor 105 may be a sensor arranged to obtain at least one environmental parameter associated with an environment surrounding the air treatment device 100. The at least one sensor 105 may be an air quality sensor arranged to measure the quality of the outside air surrounding the air treatment device 100, i.e. the quality of the air being input into and to be treated by the air treatment device 100. The at least one sensor 105 may be an air quality sensor arranged to measure the quality of the air inside the air treatment device 100 at various locations in the air treatment device 100, for example before and after the pre-treatment unit 101, before and after the primary treatment unit 103, in relation to the air treatment component 108, just to mention some examples. The at least one sensor 105 may be located, for example, downstream of the primary treatment unit 103, for example after an air filter. The at least one sensor 105 may be a differential pressure sensor for measuring differential pressure across a filter medium. The at least one sensor 105 may be an integrated sensor arranged to measure at least one of: air quality, airflow, ionization intensity, pressure drop, optical recognition of filter color or saturation. The at least one sensor 105 may be an environmental sensor. The at least one sensor may be arranged to measure humidity, temperature, airflow, particle levels, and filter resistance. The sensor 105 may be for example an optical, acoustic, or conductivity sensor for water/fan/mist status, for example in an air treatment device 100 such as a humidifier or cooler. The at least one sensor 105 may be, for example, at least one of a particle sensor, an ionization sensor and an electric resistance sensor, and may be arranged downstream an air filter and arranged to indirectly measure or provide an indication of if the function of the ionization done in the pre-treatment unit 101 fulfils a criterion, i.e. if it functions as intended. The particle sensor may detect the concentration of airborne particles, providing real-time data on air quality. This may be important in environments where particulate matter levels need to be controlled. By understanding particle load, adjustments may be made to optimize the treatment process, ensuring that the air treatment system operates within acceptable limits for air quality. The ionization sensor measures the ionization levels within the air treatment device, helping to assess the effectiveness of the ionization process in removing pollutants. The feedback from the ionization sensor may be used to adjust operational parameters to enhance ionization efficiency, leading to better air purification outcomes. Electric resistance sensors may measure the resistance across filters, indicating their condition and efficiency. A rise in resistance may indicate that filters are clogged and need replacement. Monitoring electric resistance helps in understanding how much energy is being consumed by the air treatment device, enabling energy efficiency optimization.

The air treatment device 100 comprises at least one **air treatment component 108.** There may be m number of air treatment components 108, where *m* is a positive integer. The at least one air treatment component 108 may be at least one of: an air filter, an ionization unit, a filter, a dehumidifying coil, a humidifying chamber, and a cooling element, just to mention some examples. The at least one air treatment component 108 may be comprised in the pre-treatment unit 101, the primary treatment unit 103, both the pre-treatment unit 101 and the primary treatment unit 103 or in none of the pre-treatment unit 101 or the primary treatment unit 103, i.e. it may be located outside the pre-treatment unit 101 and the primary treatment unit 103.

The air treatment device 100 may comprise a **user interface 110** or it may be arranged to be associated with a user interface 110. In other words, the user interface 110 may be located within the air treatment device 100 or it may be an external user interface 110 arranged to communicate with the air treatment device 100. The user interface 110 may be arranged to output user perceivable output representing the indicator indicative of a need for a service action to be performed on the at least one air treatment component 108. The user interface 110 is arranged to obtain user input from a user to the air treatment device 100, and to provide user output from the air treatment device 100 to the user of the air treatment device 100. The user interface 110 is arranged to handle any type of input and output, for example images, text, audio, tactile etc. The user interface 100 may be a mobile or cloud-based interface for displaying maintenance status and predictions.

The air treatment device 100 comprises a **control unit 115** or is arranged to be connected to a control unit 115. In other words, the control unit 115 may be located within the air treatment device 100 or it may be an external control unit 115 arranged to communicate with the air treatment device 100. A first part of the control unit 115 may be comprised in the air treatment device 100 and a second part of the control unit 115 may be located offboard the air treatment device 100, for example in an external computer, a cloud computing unit, another air treatment device 100, etc. The control unit 115 is arranged to control the air treatment device 100, for example to control the functioning of the air treatment device 100, to control the process of treating the air, to monitor the air treatment device 100, to determine an indicator indicative of a need for service to be performed on the at least one air treatment components 108, just to mention some examples.

Some more details regarding the sensor arranged downstream an air filter and arranged to indirectly measure or provide an indication of if the function of the ionization done in the pre-treatment unit 101 fulfils a criterion will now be provided. The air treatment device 100 may comprise at least one air quality sensor positioned downstream of the primary treatment unit 103, e.g. a primary filter unit, i.e., after the air has passed through both the ionization stage of the pre-treatment unit 101 and the filter stage of the primary treatment unit 103. This sensor 105 may be arranged to detect airborne particle concentration, residual ion levels, or changes in charge distribution in the treated air. The control unit 115 may be arranged to check if the sensor measurements fulfil a criterion, for example by comparing these measurements to a reference ionization baseline, which may be stored in memory or dynamically determined under known conditions.

If the air filter of the primary treatment unit 103 becomes excessively loaded with particles or dust, it may attenuate the effectiveness of the pre-treatment ionization in the pre-treatment unit 101, for example by trapping or discharging ionized particles before they may be effectively captured. A decline in post-filter ionization signature, e.g., lower particle attraction rate or unexpected particle retention, may thus serve as an indirect indicator of both filter degradation and ionization interference.

The control unit 115 may use this analysis to perform at least one of the following:
- Adjust the estimated lifetime of the air treatment component 108, e.g. the air filter.
- Trigger a specific service indicator related to ionization degradation.
- Alert the user to perform cleaning or replacement of the filter to restore ionization efficiency.
- Trigger automatic service, cleaning, repair etc.

This approach may enable indirect diagnostics of pre-treatment unit 101 via downstream sensor measurements, without requiring direct sensing of the ionizer unit itself. It also enhances robustness of the air treatment device 100 by correlating multiple component statuses, e.g. ionizer and air filter, using a single sensor data point.

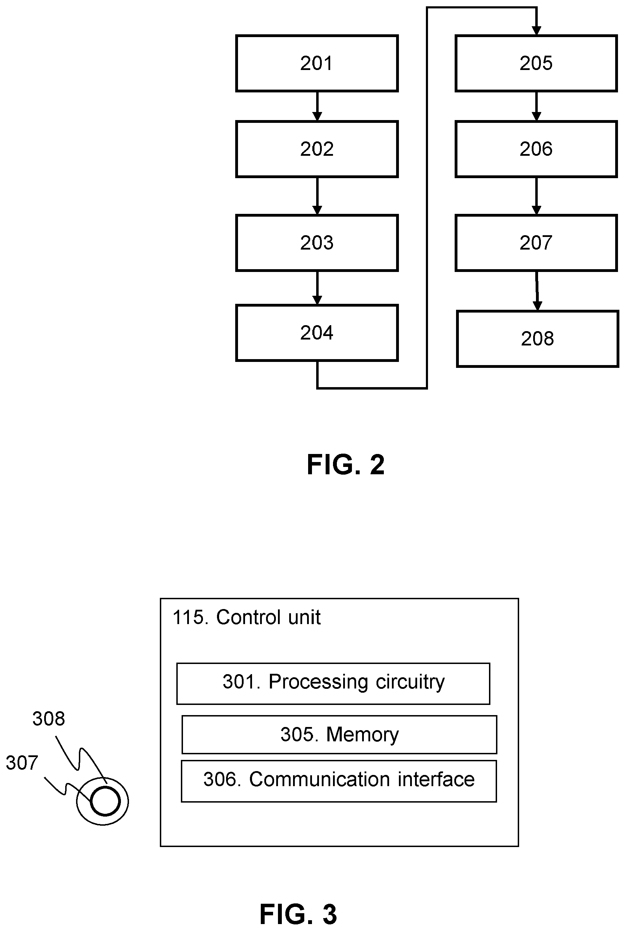

**FIG. 2** is a flow chart illustrating a method for determining an indicator indicative of a need for a service action to be performed on at least one air treatment component 108 comprised in an air treatment device 100. The method is a computer implemented method. The method is performed by a processing circuitry of a computer system. The computer system may be comprised in the control unit 115, or the computer system may be the control unit 115, or the computer system may be arranged to be connected to the control unit 115. The method may be an edge computing method performed by a unit in proximity to the air treatment device 100, for example in a gateway located in e.g. a house, an office, a server at the same site as the air treatment device 100. The method may be a cloud computing method where data may be provided to a server where the method may be performed. The method comprises at least one of the following steps, which steps may be performed in any suitable order than described below:

### Step 201

At least one operational parameter associated with an operation of the air treatment device 100 is obtained. The at least one operational parameter may be obtained from the at least one sensor 105 and/or from a data storage memory. Operation of the air treatment device 100 may comprise to treat the air input into the air treatment device 100. The purpose of the operation of the air treatment device 100 may comprise removing pollutants, allergens, and odors from the air, making it healthier to breathe etc.

The at least one operational parameter may be obtained in real-time, it may be a historic parameter, or it may be both. The at least one operational parameter may be obtained at one time instance or during a time period.

### Step 202

At least one environmental parameter associated with an environment surrounding the air treatment device 100 is obtained. The at least one environmental parameter may be obtained from the at least one sensor 105 and/or from a data storage memory. The at least one environmental parameter may comprise at least one of: air quality, humidity, temperature, pressure, or airflow etc.

The at least one environmental parameter may be obtained in real-time, it may be a historic parameter, or it may be both. The at least one environmental parameter may be obtained at one time instance or during a time period.

Steps 201 and 202 may be described as the control unit 115 monitoring the at least one of: the at least one operational parameter and the at least one environmental parameter.

### Step 203

An ionization parameter indicative of ionization effectiveness of a pre-treatment unit 101 may be obtained. The ionization parameter may be obtained from at least one sensor arranged downstream of a primary treatment unit 103.

### Step 204

Based on at least one of the at least one operational parameter and the at least one environmental parameter, the operational status of the at least one air treatment component 108 comprised in the air treatment device 100 is evaluated. The operational status may indicate how well the at least one air treatment component 108 is functioning and may reflect its performance efficiency or signs of degradation. The operational status may be associated with at least one of performance efficiency and component degradation. Performance efficiency may refer to how effectively the at least one air treatment component 108 is doing its job, like filtering air or adding moisture. Airflow rate, air quality, energy consumption may be examples of indicators of the performance efficiency. Component degradation may indicate wear and tear on the at least one air treatment component 108 that may affect its performance. Physical damage, noise level and decrease in performance may be indicators of component degradation.

The at least one air treatment component 108 may be at least one of:
- an air filter,
- an ionization unit,
- a dehumidifying coil,
- a humidifying chamber, and
- a cooling element.

The operational status may comprise an indication of a real-time air treatment component health.

The operational status may comprise information indicating operational efficiency and component status.

The process of determining the operational status may consider at least one of: operating time, air pollution levels, fan speed, and ionization efficiency.

Based on the ionization parameter indicative of ionization effectiveness of a pre-treatment unit 101 that may be determined in step 203, it may be determined whether an air filter comprised in the primary treatment unit 103 negatively affects ionization performance of pre-treatment unit 101. The effect on the ionization performance may be part of the operational status, or the operational status may be determined based on the ionization parameter and its effect on the ionization performance unit. The ionization parameter may be compared to a reference ionization effectiveness level stored in a memory or determined under known conditions.

### Step 205

A lifetime of the at least one air treatment component 108 may be estimated based on the at least one operational parameter and the at least one environmental parameter.

The lifetime of the at least one air treatment component 108 may be estimated based on the ionization parameter, or the already estimated lifetime may be adjusted based on the ionization parameter.

The lifetime may be a remaining lifetime of the at least one air treatment component 108.

### Step 206

Based on the evaluated operational status, an indicator indicative of the need for the service action to be performed on the at least one air treatment component 108 is determined. In other words, a dynamic service indicator may be determined, and which may be based on the evaluated operational status. Thus, service need may be predicted. The operational status indicates how well the at least one air treatment component 108 works. If it's not performing well, it might need attention, i.e. it might need service. Operational status such as reduced performance, increased energy use, physical signs of wear, unusual noise may be reasons for a need for a service action to be performed on the at least one air treatment component 108.

The service action may be at least one of maintenance and replacement of the air treatment component 108, just to mention some examples. Other examples of the service action may be cleaning, replacement, recalibration of the at least one air treatment component, based on degradation of the ionization effectiveness.

The indicator may be determined based on the lifetime estimated in step 205, i.e. it may be determined based on both the evaluated operational status and the lifetime.

The indicator may be determined based on at least one of the following:
- a usage pattern of the air treatment device 100,
- environmental load, and
- pre-treatment influence on the at least one air treatment component 108, wherein the pre-treatment comprises pre-treatment of incoming air entering the air treatment device 100 before being treated by the at least one air treatment component 108.

The usage pattern of the air treatment device 100 may be a current usage pattern or a historic usage pattern. Information indicating the usage pattern may be obtained from the at least one sensor 105, a memory etc.

The environmental load may be for a certain time instance or for a time period. Information indicating the environmental load may be the obtained from the at least one sensor 105 or a memory. The environmental load may be the load that the air treatment device 100 has on the surroundings of the air treatment device 100, the air in the location where the air treatment device 100 is located.

Upcoming air treatment component saturation may be forecast based on usage trends.

With the indicator, proactive replacement planning and inventory optimization may be enabled.

With the indicator, precision and efficiency of air treatment component usage may be increased. Furthermore, the air quality may be enhanced by avoiding delayed air treatment component changes.

The indicator may indicate service needs, such as water refilling, air treatment component replacement, or descaling.

The indicator may indicate which service action to be performed, a recommended timing for the service action, contact information for service personnel that may perform the service action, information about the air treatment component 108 to be subject to the service etc.

The indicator may be determined by using a machine learning algorithm. In other words, a machine learning algorithm may be used to predict air treatment component life and/or performance degradation. The machine learning algorithm may be trained using operational data as training data. The training data may be obtained from at least one air treatment unit 100 and for any suitable time period. The training data may comprise for example at least one of:
- Operation duration time, e.g. hours.
- Air flow, e.g. m³/h.
- Particle size before and after a filter, e.g. sensor measurements.
- Temperature and humidity.
- Pressure drop over the filter, e.g. Pa.
- Ionization status, on or off, or amount.
- Date and time for each measurement.
- Time for when the air treatment component has been replaced.

The service needed may be related to ionization degradation.

### Step 207

A user perceivable output representing the indicator indicative of the need for the service action to be performed on the at least one air treatment component 108 may be output. The user perceivable output may be output via the user interface 110. The user perceivable output may be of any suitable for, for example, image, text, audio, tactile output etc.

The user perceivable output may comprise information indicating the service action to be performed, a recommended timing for the service action, contact information for service personnel that may perform the service action, information about the air treatment component 108 to be subject to the service etc. A prerequisite for this may be that the control unit 115 obtains and/or determines this information before outputting it.

For example, the user perceivable output may be a visual display of a precise remaining filter capacity, e.g. 78% life remaining. In another example, the user perceivable output may be a visual display of operational efficiency, e.g., drying rate %, cooling performance, mist output. The user perceivable output may indicate the status of the air treatment component 108 and a prognose for when the next service is to be made on the at least one air treatment component 108.

The user perceivable output may be automatically adjusted based on changing environmental or operational conditions.

The user perceivable output may indicate that the service to be performed may be, for example, cleaning or replacement of the air filter to restore ionization efficiency.

The user-perceivable output may represent the need for service based on a degradation of ionization performance.

### Step 208

The service action to be performed on the at least one air treatment component 108 may be triggered, e.g. triggered automatically. The triggering may comprise sending instructions to another unit, internal or external to the air treatment device 100, that consequently schedules the service automatically. In other words, the scheduling of the service may be done automatically not necessarily involving a user.

The instructions sent to the other unit may comprise information indicating which service action is to be performed, a recommended timing for the service action, contact information for service personnel that may perform the service action, information about the air treatment component 108 to be subject to the service etc. A prerequisite for this may be that the control unit 115 obtains and/or determines this information before providing it to the other unit.

The service action that may be triggered may be, for example, cleaning or replacement of the air filter to restore ionization efficiency. Other examples of the service action may be cleaning, replacement, recalibration of the at least one air treatment component, based on degradation of the ionization effectiveness.

A computer program product comprises program code for performing, when executed by a processing circuitry, the method of described in FIG. 2

A non-transitory computer-readable storage medium comprises instructions, which when executed by a processing circuitry, cause the processing circuitry to perform the method described in FIG. 2.

The control unit 115 will now be described in more detail with reference to **FIG. 3.** FIG. 3 is a schematic drawing illustrating the control unit 115. The control unit 115 comprises **processing**

### circuitry 301.

At least one of the control unit 115 and the processing circuitry 301 is arranged to determine an indicator indicative of a need for a service action to be performed on at least one air treatment component 108 comprised in an air treatment device.

At least one of the control unit 115 and the processing circuitry 301 is arranged to obtain at least one operational parameter associated with operation of the air treatment device 100.

At least one of the control unit 115 and the processing circuitry 301 is arranged to obtain at least one environmental parameter associated with an environment surrounding the air treatment device 100.

At least one of the control unit 115 and the processing circuitry 301 may be arranged to obtain an ionization parameter indicative of ionization effectiveness of a pre-treatment unit 101. The ionization parameter may be obtained from at least one sensor arranged downstream of a primary treatment unit 103. The operational status may be determined based on the ionization parameter and its effect on the ionization performance unit. The ionization parameter may be compared to a reference ionization effectiveness level stored in a memory or determined under known conditions.

Based on at least one of the at least one operational parameter and the at least one environmental parameter, at least one of the control unit 115 and the processing circuitry 301 is arranged to evaluate operational status of at least one air treatment component 108 comprised in the air treatment device 100.

Based on the ionization parameter indicative of ionization effectiveness of a pre-treatment unit 101, at least one of the control unit 115 and the processing circuitry 301 may be arranged to determine whether an air filter comprised in the primary treatment unit 103 negatively affects ionization performance of pre-treatment unit 101. The effect on the ionization performance may be part of the operational status.

At least one of the control unit 115 and the processing circuitry 301 may be arranged to estimate a lifetime of the at least one air treatment component 108 based on the at least one operational parameter and the at least one environmental parameter. The lifetime of the at least one air treatment component 108 may be estimated based on the ionization parameter, or the already estimated lifetime may be adjusted based on the ionization parameter.

Based on the evaluated operational status, at least one of the control unit 115 and the processing circuitry 301 is arranged to determine an indicator indicative of a need for a service action to be performed on the at least one air treatment component 108. The indicator may be determined based on the estimated lifetime. The indicator may be determined based on at least one of:
- a usage pattern of the air treatment device 100,
- environmental load, and
- pre-treatment influence on the at least one air treatment component 108, wherein the pre-treatment comprises pre-treatment of incoming air entering the air treatment device 100 before being treated by the at least one air treatment component 108.

The service needed may be related to ionization degradation.

The at least one air treatment component 108 may be a filter arranged to at least partly filter incoming air entering the air treatment device 100. The at least one air treatment component 108 may be at least one of:
- an air filter,
- an ionization unit,
- a dehumidifying coil,
- a humidifying chamber, and
- a cooling element.

At least one of the control unit 115 and the processing circuitry 301 may be arranged to output a user perceivable output representing the indicator indicative of the need for the service action to be performed on the at least one air treatment component 108. The user perceivable output may indicate that the service to be performed may be, for example, cleaning or replacement of the air filter to restore ionization efficiency. The user-perceivable output may represent the need for service based on a degradation of ionization performance.

At least one of the control unit 115 and the processing circuitry 301 may be arranged to trigger the service action to be performed on the at least one air treatment component 108. The service action that may be triggered may be, for example, cleaning or replacement of the air filter to restore ionization efficiency. Other examples of the service action may be cleaning, replacement, recalibration of the at least one air treatment component, based on degradation of the ionization effectiveness.

The control unit 115 may comprise a **memory 305.** The memory 305 comprises one or more units to be used to store data on, such as indicator, sensor measurements, time information, parameters, thresholds, data and applications to perform the methods disclosed herein when being executed, and similar. The memory 305 comprises instructions executable by the processing circuitry 301.

Furthermore, the control unit 115 may comprise a **communication interface 306** such as comprising a transmitter, a receiver, a transceiver and/or one or more antennas.

The method described herein may be implemented using e.g., a **computer program product 307** or a computer program, comprising instructions, i.e., software code portions, which, when executed on at least one processor, cause the at least one processor to carry out the actions described herein, as performed by the control unit 115. The computer program product 307 may be stored on a **computer-readable storage medium 308** e.g. a disc, a universal serial bus (USB) stick or similar. The computer-readable storage medium 308 having stored there on the computer program product, may comprise the instructions which, when executed on at least one processor, cause the at least one processor to carry out the actions described herein, as performed by the control unit 115. The computer-readable storage medium may be a transitory or a non-transitory computer-readable storage medium.

The control unit 115 may be arranged to:
i. monitor operational parameters and environmental input,
ii. estimate operational status, e.g. performance efficiency and component degradation,
iii. calculate an indicator, e.g. a dynamic replacement or maintenance indicator based on usage, environmental load, and pre-treatment influence, and to
iv. (optionally) output a user-perceivable signal indicating the maintenance or replacement timing.

The control logic is modular and applicable across multiple device types including air purifiers, dehumidifiers, humidifiers and air coolers.

The present disclosure optimizes the timing of air treatment component service, e.g. maintenance and/or replacement. Unlike time-based alerts or basic pressure-based systems, this disclosure combines environmental monitoring with adaptive logic to ensure that air treatment components 108 are used efficiently. The present disclosure enables a multi-device ecosystem to share usage profiles and environmental feedback, and it enables holistic air quality and comfort optimization in smart homes or offices.

The embodiments herein are not limited to the above described embodiments. Various alternatives, modifications and equivalents may be used. Therefore, the above embodiments should not be taken as limiting the scope of the embodiments, which is defined by the appended claims. A feature from one embodiment may be combined with one or more features of any other embodiment.

The term "at least one of A and B" should be understood to mean "only A, only B, or both A and B.", where A and B are any parameter, number, indication used herein etc.

It should be emphasized that the term "comprises/comprising" when used in this specification is taken to specify the presence of stated features, integers, steps or components, but does not preclude the presence or addition of one or more other features, integers, steps, components or groups thereof. It should also be noted that the words "a" or "an" preceding an element do not exclude the presence of a plurality of such elements.

The term "configured to" used herein may also be referred to as "arranged to", "adapted to", "capable of" or "operative to".

It should also be emphasised that the steps of the methods defined in the appended claims may, without departing from the embodiments herein, be performed in another order than the order in which they appear in the claims.

## Claims

1. A control unit (115) for determining an indicator indicative of a need for a service action to be performed on at least one air treatment component comprised in an air treatment device (100), wherein the control unit (115) is arranged to:
obtain at least one operational parameter associated with operation of the air treatment device (100);
obtain at least one environmental parameter associated with an environment surrounding the air treatment device (100);
based on at least one of the at least one operational parameter and the at least one environmental parameter, evaluate operational status of at least one air treatment component (108) comprised in the air treatment device (100); and to
based on the evaluated operational status, determine an indicator indicative of a need for a service action to be performed on the at least one air treatment component (108).

2. The control unit (115) according to claim 1, wherein the control unit (115) is arranged to:
output a user perceivable output representing the indicator indicative of the need for the service action to be performed on the at least one air treatment component (108).

3. The control unit (115) according to any of the preceding claims, wherein the control unit (115) is arranged to:
trigger the service action to be performed on the at least one air treatment component (108).

4. The control unit (115) according to any of the preceding claims, wherein the control unit (115) is arranged to:
estimate a lifetime of the at least one air treatment component (108) based on the at least one operational parameter and the at least one environmental parameter, and
wherein the indicator is determined based on the estimated lifetime.

5. The control unit (115) according to any of the preceding claims, wherein the indicator is determined based on at least one of:
- a usage pattern of the air treatment device (100),
- environmental load, and
- pre-treatment influence on the at least one air treatment component (108), wherein the pre-treatment comprises pre-treatment of incoming air entering the air treatment device (100) before being treated by the at least one air treatment component (108).

6. The control unit (115) according to any of the preceding claims, wherein the at least one air treatment component (108) is at least one of:
• an air filter,
• an ionization unit,
• a dehumidifying coil,
• a humidifying chamber, and
• a cooling element.

7. The control unit (115) according to any of the preceding claims, wherein the control unit (115) is arranged to:
obtain an ionization parameter indicative of ionization effectiveness of a pre-treatment unit (101), wherein the ionization parameter is obtained from at least one sensor arranged downstream of a primary treatment unit (103);
based on the ionization parameter, determine whether an air filter comprised in the primary treatment unit (103) negatively affects ionization performance of pre-treatment unit (101); and
wherein the operational status is determined based on the ionization parameter and its effect on the ionization performance unit (101).

8. An air treatment device (100) comprising the control unit (115) of any of claims 1-7.

9. The air treatment device (100) according to claim 8, comprising or being associated with a user interface (110) arranged to output user perceivable output representing the indicator.

10. The air treatment device (100) according to claim 9, comprising at least one of:
- a pre-treatment unit (101) arranged to pre-treat incoming air coming into the air treatment device (100);
- a primary treatment unit (103) arranged to perform primary treatment of the air coming into the air treatment device (100); and
- at least one sensor (105).

11. The air treatment device (100) according to claim 10, wherein the pre-treatment unit (101) comprises an electrostatic ionizer for ionizing incoming air.

12. The air treatment device (100) according to any of claims 10-11, wherein the at least one sensor (105) comprises at least one of: a differential pressure sensor, a particle sensor, an ionization sensor and an electric resistance sensor.

13. The air treatment device (100) according to any of claims 8-12, wherein the air treatment device (100) is at least one of: an air purifier, a dehumidifier, a humidifier and an air cooler.

14. A computer implemented method for determining an indicator indicative of a need for a service action to be performed on at least one air treatment component (108) comprised in an air treatment device (100), the method comprising:
*obtaining* (201), by a processing circuitry (301) of a computer system, at least one operational parameter associated with an operation of the air treatment device (100);
*obtaining* (202), by the processing circuitry (301) at least one environmental parameter associated with an environment surrounding the air treatment device (100);
based on at least one of the at least one operational parameter and the at least one environmental parameter, *evaluating* (203), by the processing circuitry (301), operational status of the at least one air treatment component (108) comprised in the air treatment device (100); and to
based on the evaluated operational status, *determining* (205), by the processing circuitry (301), the indicator indicative of the need for the service action to be performed on the at least one air treatment component (108).

15. A computer program product comprising program code for performing, when executed by a processing circuitry (301), the method of claim 14.

16. A non-transitory computer-readable storage medium comprising instructions, which when executed by a processing circuitry (301), cause the processing circuitry to perform the method of claim 14.
